# EUROPEAN PATENT SPECIFICATION

(11) **EP 3 113 607 B1**
(45) Date of publication and mention of the grant of the patent: **18.07.2018**
(21) Application number: 15703613.8
(22) Date of filing: 11.02.2015
(51) Int. Cl.: A01M 25/00, A01N 25/32, A01P 11/00, A01N 43/16

(54) **WAX-FREE RODENT BLOCK BAIT WITH STYRENE-ACRYLATE BINDER**
WACHSFREIER NAGER-BOCKKÖDER MIT STYROL-ACRYLAT-BINDEMITTEL
APPÂT AVEC BLOC DE RONGEURS SANS CIRE AVEC LIANT DE STYRÈNE-ACRYLATE

(30) Priority: 04.03.2014 EP 14157596
(43) Date of publication of application: 11.01.2017
(73) Proprietor: BASF Agro B.V., 6835 EA Arnhem (NL)
(72) Inventor: WEICHEL, Lars, Research Triangle Park NC 27709 (US); HUGHES, Sharon, Widnes Cheshire WA8 5QQ (GB)
(74) Representative: BASF IP Association
(86) International application number: PCT/EP2015/052848
(87) International publication number: WO 2015/132054

(56) References cited:
- GB-A- 2 115 698
- US-A1- 2002 099 131
- US-A1- 2008 317 803
- US-A1- 2010 260 813

## Description

The present invention relates to a wax-free rodenticidal bait block, to method of manufacturing this and to its use in the control of rodents, particularly rats and mice.

Rodent populations, especially those of rats and mice, are controlled principally because of the economic damage they cause. Rats and mice are responsible for large scale food/feed consumption and spoilage and cause structural damage to buildings and other damage resulting from their habits of chewing and digging. Infestations by rats and mice are often controlled by the administration of poison formulations. Bait blocks are often used to avoid the scattering of poisoned bait and because they are generally more resistant to damp or wet conditions.

Rodenticidal block baits have traditionally been manufactured by dispersing feed materials and one or more rodenticides in a hard or semi-solid wax, typically paraffin wax, binder. The mixture is then moulded or formed into suitably sized and shaped blocks which can be placed in a location close to signs of rodent activity but inaccessible to children and non-target animals or in tamper-proof bait stations.

Rodents have continuously growing incisors and the natural behaviour of rodents is to gnaw hard materials in order to wear down these teeth to keep them short. Conventional wax-based rodent blocks do not have sufficient hardness to satisfy the rodents' natural desire to gnaw.

It has been proposed in the prior art to use binder materials other than wax in the manufacture of bait blocks. GB-A-2115698 discloses a rodenticidal block bait consisting essentially of brittle-hard polyvinyl acetate, or of a brittle-hard copolymer of vinyl acetate and acrylic acid ester, methacrylic acid ester and/or acrylonitrile, and a foodstuff treated with a rodenticidal poison and dispersed in the polymer carrier. According to the invention disclosed in GB-A-2115698, the polymer component constitutes 4 to 30% by weight of the block bait and the actual examples described in the document describe baits comprising 20% by weight of polyvinyl acetate, or vinyl acetate/acrylic acid ester copolymer or vinyl acetate/acrylonitrile copolymer. According to GB-A-2115698 the block bait has adequate brittle hardness suitable for gnawing and has a high level of patentability.

WO-A-96/03037 discloses a rodenticidal bait in the form of agglomerated granules comprising a cereal base, an anticoagulant rodenticide and water-soluble film-forming binder. The process of manufacture of the rodenticidal bait according to WO-A-96/03037 typically comprises mixing the dry ground cereals with rodenticide and then spraying the mixture with an aqueous solution of the film-forming binder. The wet granular mixture may then be formed into blocks and allowed to dry or, alternatively, may be dried and then mixed with molten fat or wax and then moulded into blocks which are then allowed to cool and solidify. Examples of film-forming binders, according to this document, include cellulose ethers, starch, polyvinyl alcohol, polyvinyl pyrrolidone, various gums such as guar, xanthan and locust bean gum, and polyacrylates although the preferred film-forming binder is said to be hydroxypropyl cellulose.

US-A-2005/0048095 discloses a pesticide consisting of disc-shaped pellets formed from a composition comprising, *inter alia,* starch and an aqueous dispersion of polyacrylate.

US 2008/0317803 discloses novel aqueous rodenticide formulations, cereal grains treated with these formulations, and methods of controlling rodents based on these formulations.

US 2010/0260813 describes a rodenticidal mixture comprising at least one rodenticide, at least one painkiller and at least one biocide, which is suitable for the preparation of rodenticidal bait formulations which are employed for controlling rodent pests.

US 2002/0099131 describes water dispersible solid granular agrochemical formulations, typically in the form of wettable powders or water dispersible granules, including one or more water dispersible agrochemical active components and a dispersing agent including water dispersible styrene (meth)acrylic copolymer.

The bait blocks of the prior art and their methods of manufacture are found to suffer from various disadvantages. For instance, in GB-A-2115698 a large amount, e.g. 20% by weight, of polymer is used to prepare a brittle-hard block. The hardness of the bait blocks in WO-A-96/03037 and in US-A-2005/0048095 is not discussed. Bait blocks containing wax or fat not only fail to satisfy hardness requirements but also lack stability at elevated temperatures. Also, many of the bait blocks according to the prior art are still not sufficiently palatable to rodents to ensure that they retain an on-going interest in the bait. Furthermore, some processes for manufacturing prior art bait blocks require extended drying times or hardening times and are not sufficiently simple and/or reliable for industrial operation. It is also desirable for a bait block to be resistant to water since these may be exposed to wet or damp conditions, during use. Any binder used to bind the food components of the bait block together must be able to exhibit good adhesion properties to many different substrates.

It is the object of the present invention to provide rodenticidal bait blocks and a method for manufacturing these which overcome the disadvantages of the prior art.

In particular, the present invention provides wax-free bait blocks which contain low amounts of polymeric binder and which have good palatability and hardness properties and which have high temperature stability and moisture-resistance.

Accordingly, the present invention provides a rodenticidal bait block comprising a foodstuff for the rodent comprising edible seed and/or cereal, at least one rodenticide, and a polymeric binder wherein the polymeric binder comprises a copolymer of a (meth)acrylic ester and styrene, wherein a bait block does not contain a wax binder

The polymeric binder comprises a copolymer of an ester of acrylic acid and/or methacrylic acid and styrene. Preferably, the ester is a C₄ to C₁₂ aliphatic hydrocarbyl ester of acrylic acid and/or a C₄ to C₁₂ aliphatic hydrocarbyl ester of methacrylic acid. More preferably, the ester is a C₄ to C₁₂ alkyl ester of acrylic acid and/or a C₄ to C₁₂ alkyl ester of methacrylic acid. According to a further embodiment, the polymeric binder comprises a copolymer of an ester of acrylic acid and/or methacrylic acid, for instance as described above, with styrene and, additionally, with acrylic acid and/or methacrylic acid. Such a polymeric binder may comprise a copolymer of the above-described monomers and, in addition, further monomers, such as one or more monoethylenically unsaturated compounds.

The bait block of the invention does not contain a wax binder. Accordingly, disadvantages noted in the prior art arising from the use of a wax binder are thereby avoided.

It has surprisingly been found that rodenticidal bait blocks according to the invention are highly palatable to rodents, particularly rats, yet and have adequate hardness and high stability despite the use of only a low content of polymeric binder.

The rodenticidal bait block of the present invention comprises a foodstuff for the rodent. The foodstuff contains edible seed or cereal or their mixtures. Examples of edible seeds include poppy seed, sunflower seed and sesame seed. By the term "cereal" we mean the edible grain or seed of crops, generally those of the family Poaceae, that are harvested for their dry grain or seed. Examples of cereals include, but are not limited to, wheat, barley, maize, sorghum, oats, rice, rye, millet and canary seed. Typically the bait block of the invention will contain more than one seed and/or cereal in order to present the rodent with different flavours in the same block.

The cereal used in the bait block will be in the form of whole grains or seeds, ground grains or seeds, cut or comminuted grains or seeds and mixtures of these. Examples of cut or comminuted grains include pinhead oatmeal, cut wheat and corn grits. Typically, the bait block of the invention will contain a mixture of whole grain or seed with ground or cut grain or seed in order to present the rodent with a variety of chew and bite textures in the same block. We have found that a mixture of canary seed with cut wheat grains presents the rodent with a mixture of flavours and textures which is sufficiently attractive to the rodent to retain interest.

The total content of cereal in the bait blocks is typically from 50 to 99% by weight, preferably from 70 to 98% and more preferably from 70 to 90% by weight.

The bait blocks of the present invention contain at least one rodenticidally-active substance. The rodenticidally-active substance may be an anticoagulant rodenticide or a non-anticoagulant rodenticide. Examples of anticoagulant rodenticides that may be used in the bait block of the invention include one or more of difenacoum, brodifacoum, flocoumafen, bromadiolone, difethialone, warfarin, coumatetralyl, chlorophacinone, diphacinone, coumachlor, coumafuryl and pindone. Preferred anticoagulant rodenticides for use in the present invention are difenacoum or flocoumafen. Examples of non-anticoagulant rodenticides that may be used in the bait block of the invention include vitamin D, including ergocalciferol (vitamin D₂) or cholecalciferol (vitamin D₃), alphachloralose and norbormide. Preferably the non-anticoagulant rodenticide, if used, is ergocalciferol or cholecalciferol or a mixture thereof. Typically, the rodenticidally-active substance used in the bait block of the invention will be selected from difenacoum, flocoumafen and cholecalciferol.

Typically, an anticoagulant rodenticide will be used in the present invention in an amount in the range of from 0.001 to 0.03% by weight, preferably 0.001 to 0.025% and more preferably 0.0025 to 0.025% by weight, based on the total weight of the bait block. If the bait block of the present invention contains Vitamin D (cholecalciferol) as the rodenticidally-active substance, this will typically be used in an amount of 500-1000ppm (0.05-0.1% by weight). The actual amount used will, of course, depend on the identity of the rodenticidally-active substance and on the target species.

In an embodiment of the invention the rodenticidally-active substance is provided, in the bait block, on or in the, or part of the, seed or cereal. It is generally known in the art to use, as a rodent bait, wheat grains or cut wheat grains treated with a rodenticide such as difenacoum. Thus, according to such an embodiment, the seed, grain or cut grain in the bait block is pre-treated with the rodenticidally-active substance prior to incorporation into the block.

It has been shown in WO 2007/031796 that the palatability and efficacy of a rodent bait is increased by the presentation to the rodent of a mixture of a plurality of bait particles (i.e. particles containing rodenticide) with a plurality of non-bait particles (particles not containing rodenticide) wherein the non-bait particles have a flavour different from the flavour of the bait particles and wherein the non-bait particles are distinguished from the bait particles by at least one physical characteristic selected from size, shape, surface texture and internal texture. This concept may be utilised in the bait block of the present invention. According to an embodiment of the present invention, therefore, the bait block contains a plurality of bait particles, such as seed or cereal, treated with a rodenticide and a plurality of non-bait particles, such as seed or cereal, which do not contain rodenticide, wherein the non-bait particles have a flavour different from the flavour of the bait particles and wherein the non-bait particles are distinguished from the bait particles by at least one physical characteristic selected from size, shape, surface texture and internal texture. Particulate rodent bait comprising such a mixture of bait and non-bait particles is available under the name "Fortec™" from BASF plc.

In the bait block of the invention the foodstuff comprising seed and/or cereal is bound together by a polymeric binder. The polymeric binder used in the present invention comprises a copolymer based on a (meth)acrylic ester and styrene. By the term "(meth)acrylic ester", we mean an ester selected from an ester of acrylic acid, an ester of methacrylic acid and mixtures thereof.

The polymeric binder comprises a copolymer of an ester of acrylic acid and/or methacrylic acid and styrene. Preferably the ester is a C₄ to C₁₂ aliphatic hydrocarbyl ester of acrylic acid and/or a C₄ to C₁₂ aliphatic hydrocarbyl ester of methacrylic acid. More preferably, the ester is a C₄ to C₁₂ alkyl ester of acrylic acid and/or a C₄ to C₁₂ alkyl ester of methacrylic acid. According to a further embodiment, the polymeric binder comprises a copolymer of an ester of acrylic acid and/or methacrylic acid, for instance as described above, with styrene and, additionally, with acrylic acid and/or methacrylic acid. Such a polymeric binder may comprise a copolymer of the above-described monomers and, in addition, further monomers, such as one or more monoethylenically unsaturated compounds.

In the above-described copolymer of the polymeric binder, the (meth)acrylic ester component is preferably a 4 to 12C alkyl ester of (meth)acrylic ester, more preferably a 4 to 10C alkyl ester. According to a particularly preferred embodiment of the invention, the (meth)acrylic ester component of the copolymer described above is 2-ethylhexyl (meth)acrylate.

Typically, the polymeric binder will be formed from a monomer composition containing from 25 to 75% by weight, preferably 40 to 65% by weight, of the (meth)acrylic ester component, and from 20 to 60%, preferably 30 to 50% by weight of styrene. In the event that (meth)acrylic acid is also present in the monomer composition, it will typically be used in an amount of up to 10%, preferably less than 5%, by weight. In the event that the monomer composition contains any further monomer compounds, these will typically be present in the monomer composition in an amount of up to 10%, preferably less than 5%, by weight. We have achieved particularly good results using a polymeric binder produced from a monomer composition containing 50wt% 2-ethylhexyl acrylate, 46wt% styrene, 2wt% acrylic acid and 2wt% further monomers.

The polymeric binder, described above, typically will be present in the bait block in an amount of from 1 to 18% by weight based on the total weight of the bait block, preferably from 2 to 10% and more preferably 3 to 10% by weight. As mentioned above, good hardness, high stability and moisture resistance of the bait blocks of the present invention can be achieved using only a low content of polymeric binder.

The bait block may also contain one or more components such as sweetening agents (e.g. sugar), vegetable oil, additional food components, pigments or dyes, flavouring agents, preservatives, taste deterrent (e.g. denatonium benzoate) and release agent (e.g. magnesium stearate). Such additional components are well known to the person skilled in the art.

The bait block of the present invention may be manufactured by a process comprising mixing the seed and/or cereal together with the rodenticide and with an aqueous dispersion of the polymeric binder, moulding the mixture into a block and then drying the moulded block.

As mentioned above, in one embodiment the, or part of the, seed or cereal may be pre-treated with the rodenticidally-active substance before being mixed with the aqueous dispersion of the polymeric binder and any other components.

The polymeric binder, as described above, is added in the manufacturing process in the form of an aqueous dispersion. The aqueous dispersion of the polymeric binder used in the manufacturing process may be produced by radically initiated aqueous emulsion polymerization of the ethylenically unsaturated compounds. The implementation of radically initiated emulsion polymerizations of ethylenically unsaturated monomers in an aqueous medium has been described many times before and is, therefore, sufficiently well-known to the person skilled in the art. This process is disclosed in Emulsion Polymerization in Encyclopedia of Polymer Science and Engineering, vol.8, pages 659 ff. (1987); D.C. Blackley, in High Polymer Lattices, vol.1, pages 35 ff. (1966); H. Warson, The Applications of Synthetic Resin Emulsions, chapter 5, pages 246 ff. (1972); D. Diederich, Chemie in unserer Zeit 24, pages 135 to 142 (1990); Emulsion Polymerization, Interscience Publishers, New York (1965); DE-A 40 03 422; and Dispersionen synthetischer Hochpolymerer, F. Holscher, Springer-Verlag, Berlin (1969). The radically initiated aqueous emulsion polymerization customarily takes place such that the ethylenically unsaturated monomers are dispersed in the aqueous medium, generally with additional use of dispersing assistants, such as emulsifiers and/or protective colloids, and are polymerized by means of at least one water-soluble radical polymerization initiator. In the resultant aqueous polymer dispersions, the residual levels of unreacted ethylenically unsaturated monomers are frequently lowered by chemical and/or physical methods likewise known to the skilled person [see, for example, EP-A 771328, DE-A 19624299, DE-A 19621027, DE-A 19741184, DE-A 19741187, DE-A 19805122, DE-A 19828183, DE-A 19839199, DE-A 19840586, and 19847115], the polymer solids content is adjusted to a desired level by dilution or concentration. Typically, the aqueous dispersion will have a polymeric binder content (i.e. solids content) in the range of from 50 to 80% by weight, preferably 50 to 70%, more preferably 50 to 65% and most preferably 50 to 60% by weight.

The aqueous dispersion is typically added in an amount such that final block contains 1 to 18%, preferably 2 to 10%, more preferably 3 to 10%, even more preferably 3 to 8% by weight of polymeric binder based on the total weight of the bait block. We have found that good results are obtained by the use of 7.5% by weight (based on the total weight of the formulation) of an aqueous dispersion containing 52% by weight of polymeric binder. Thus, in such a formulation the actual amount of polymeric binder is less than 4% by weight based on the total weight of the formulation.

Conveniently, the aqueous dispersion of the polymeric binder may be mixed with the other components of the bait block formulation in an industrial mixer or blender to ensure that the binder dispersion is distributed homogenously throughout the mixture. Mixers or blenders of this type that may be used in the invention are well known to the person skilled in the art. The mixture, when formed, may be fed to moulds of the desired dimensions or extruded and cut into blocks. The moulded, shaped or formed blocks will then be subjected to drying conditions to remove excess moisture. The drying stage may be carried out at room temperature or may be assisted by the application of heat, if desired.

The present invention further provides a method for controlling rodents which comprises placing a rodenticidal bait block according to the invention in the vicinity of rodent activity.

### Example 1

A polymeric binder in the form of an aqueous dispersion was prepared using a monomer composition containing 50wt% 2-ethylhexyl acrylate, 46wt% styrene, 2wt% acrylic acid and 2wt% further monomers.

A 4l glass flask equipped with stirrer and 4 metering devices was charged to 20 to 25°C (room temperature) and under a nitrogen atmosphere with 530g of deionized water and with 21.2g of a 33% by weight, aqueous polystyrene seed dispersion (average particle diameter 32nm), and this initial charge was heated to 85°C with stirring. When this temperature was reached, 10.0g of feed 2 was metered in over the course of 5 minutes. Subsequently, beginning simultaneously, the total amount of feed 1 and the remainder of feed 2 were metered in with stirring, the aforementioned temperature being maintained. The remainder of feed 2 was metered in continuously and at a constant flow rate over 3 hours and 15 minutes, while feed 1 was metered in beginning with a metering rate of 2.74g/min, raised over the course of 15 minutes to 11g/min, and then subsequently with the constant metering rate of 11g/min.

**Feed 1: aqueous emulsion of**

| | |
|---|---|
| 28.0 g | acrylic acid |
| 14.0 g | vinyltriethoxysilane |
| 637 g | styrene |
| 707 g | ethylhexyl acrylate |
| 140 g | a 15% strength by weight aqueous solution of sodium lauryl sulfate |
| 14.0 g | further monomers |
| 5.6 g | a 25% strength by weight aqueous solution of sodium hydroxide |
| 365 g | deionized water |

**Feed 2: aqueous solution of**

| | |
|---|---|
| 93.3 g | deionized water |
| 7.0 g | sodium persulfate |

The polymerization mixture was then left to post-polymerize at 80°C for 2 hours, and was cooled to room temperature. A pH of 7.8 was set by addition of 25% strength by weight aqueous sodium hydroxide solution. The aqueous polymer dispersion obtained had a solids content of 51.8% by weight, based on the total weight of the aqueous dispersion. The number- average particle diameter was found to be 187nm.

The solids contents were determined generally by drying a defined amount of the aqueous polymer dispersion (approximately 0.8g) to constant weight at a temperature of 130°C (approximately 2 hours) using the moisture analyzer HR73 from Mettler Toledo. Two measurements were carried out in each case. The figure reported represents the average of these measurements.

The number-average particle diameter of the polymer particles was determined generally by dynamic light scattering on a 0.005 to 0.01 percent by weight, aqueous polymer dispersion at 23°C, using an Autosizer IIC from Malvern Instruments, England. The figure reported is the average diameter of the cumulant evaluation (cumulant z average) of the measured autocorrelation function (ISO standard 13321).

A wax-free rodenticidal bait block was made using the polymer dispersion prepared above. The formulation used in the manufacture of the bait block is shown in the table below.

| **Component** | **Function** | **Content (%w/w)** |
|---|---|---|
| Cut wheat | bait base | 75.6 |
| Difenacoum* liquid master | active | 1 |
| binder aqueous dispersion** | binder | 7.5 |
| monopropylene glycol | humectant | 0.4 |
| magnesium stearate | block release agent | 7.5 |
| other constituents (e.g. Bitrex, sugar and canary seed) | | balance (to 100%) |

| | | |
|---|---|---|
| *The Difenacoum was added in the form of cut wheat pre-treated with difenacoum. The liquid master contained 0.5% active ingredient. **The binder aqueous dispersion is an aqueous dispersion containing 51.8% solids by weight of the aqueous dispersion. | | |

The formulation above was mixed thoroughly and then compacted into a prepared mould. The moulded mixture was then removed from the mould and subjected to drying. The bait block, thus produced, possessed integrity and did not crumble or break easily.

### Example 2

In accordance with the procedure described above in Example 1, a wax-free rodenticidal block was made using the formulation shown in the table below.

| **Component** | **Function** | **Content (% w/w)** |
|---|---|---|
| cut wheat | bait base | 75.6 |
| flocoumafen* liquid master | active rodenticide | 1 |
| binder aqueous dispersion** | binder | 7.5 |
| monopropylene glycol | humectant | 0.4 |
| magnesium stearate | block release agent | 7.5 |
| other constituents (e.g. Bitrex, sugar, canary seed) | | balance |

| | | |
|---|---|---|
| *The flocoumafen was added in the form of cut wheat pre-treated with flocoumafen. The liquid master contained 0.5% active ingredient. **The binder aqueous dispersion is an aqueous dispersion containing 51.8% solids by weight of the aqueous dispersion. | | |

The formulation above was mixed thoroughly and then compacted into a prepared mould. The moulded mixture was then removed from the mould and subjected to drying. The bait block, thus produced, possessed integrity and did not crumble or break easily.

## Claims

1. A rodenticidal bait block comprising a foodstuff for the rodent comprising edible seed and/or cereal, at least one rodenticide, and a polymeric binder wherein the polymeric binder comprises a copolymer of a (meth)acrylic ester and styrene, wherein the bait block does not contain a wax binder.

2. A bait block according to claim 1, wherein the polymeric binder comprises a copolymer of a C₄-C₁₂ alkyl (meth)acrylic ester and styrene.

3. A bait block according to either claim 1 or claim 2, wherein the polymeric binder is present in an amount of from 1 to 18% by weight based on the total weight of the bait block.

4. A bait block according to any one of claims 1 to 3, wherein the polymeric binder is formed from a monomer composition containing from 25 to 75% by weight of the (meth)acrylic ester component and from 20 to 60% of styrene.

5. A bait block according to any one of claims 1 to 4, wherein the polymeric binder contains in the monomer composition further monomer compounds in an amount of up to 10%, by weight.

6. A bait block according to any one of claims 1 to 5, wherein the (meth)acrylic ester component is a C₄ to C₁₀ alkyl ester.

7. A bait block according to any one of claims 1 to 6, wherein the foodstuff comprises one or more edible seed selected from canary seed, poppy seed, sunflower seed and sesame seed.

8. A bait block according to any one of claims 1 to 7, wherein the foodstuff comprises one or more cereal selected form wheat, barley, maize, sorghum, oats, rice, rye and millet.

9. A bait block according to any one of claims 1 to 8, wherein the cereal is whole grains or seed, ground grains or seed, cut or comminuted grains or seed or a mixture of any of these.

10. A bait block according to any one of claims 1 to 9, wherein the total content of cereal in the bait block is from 50 to 99% by weight.

11. A bait block according to any one of claims 1 to 10, which contains a plurality of bait particles containing a rodenticide and a plurality of non-bait particles not containing a rodenticide, wherein the non-bait particles have a flavour different from the flavour of the bait particles and wherein the non-bait particles are distinguished from the bait particles by at least one physical characteristic selected from size, shape, surface texture and internal texture.

12. A bait block according to any one of claims 1 to 11, wherein the rodenticide is selected from difenacoum, brodifacoum, flocoumafen, bromadiolone, difethialone, warfarin, coumatetralyl, chlorophacinone, diphacinone, coumachlor, coumafuryl, pindone, vitamin D, ergocalciferol, cholecalciferol, alphachloralose and norbormide.

13. A bait block according to any one of claims 1 to 12 obtainable by mixing the foodstuff comprising edible seed and/or cereal with the rodenticide and with an aqueous dispersion of the polymeric binder, moulding or shaping the mixture to form a block and then drying the block.

14. A method of making the rodenticidal bait block of any one of claims 1 to 13, comprising the steps of mixing the foodstuff comprising edible seed and/or cereal with the rodenticide and with an aqueous dispersion of the polymeric binder, moulding or shaping the mixture to form a block and then drying the block.

15. A method for controlling rodents which comprises placing a rodenticidal bait block according to any one of claims 1 to 13 in the vicinity of rodent activity.

## Patentansprüche

1. Nager-Köderblock, umfassend ein Futtermittel für den Nager, das verzehrbare(s) Samen und/oder Getreide umfasst, wenigstens ein Rodentizid und ein polymeres Bindemittel, wobei das polymere Bindemittel ein Copolymer von einem (Meth)acrylsäureester und Styrol umfasst, wobei der Köderblock kein Wachsbindemittel enthält.

2. Köderblock gemäß Anspruch 1, wobei das polymere Bindemittel ein Copolymer eines C₄-C₁₂-Alkyl(meth)acrylsäureesters und Styrol umfasst.

3. Köderblock gemäß Anspruch 1 oder Anspruch 2, wobei das polymere Bindemittel in einer Menge von 1 bis 18 Gew.-% bezogen auf das Gesamtgewicht des Köderblocks vorhanden ist.

4. Köderblock gemäß einem der Ansprüche 1 bis 3, wobei das polymere Bindemittel aus einer Monomerzusammensetzung gebildet ist, die von 25 bis 75 Gew.-% an der (Meth)acrylsäureesterkomponente und von 20 bis 60 Gew.-% Styrol enthält.

5. Köderblock gemäß einem der Ansprüche 1 bis 4, wobei das polymere Bindemittel in der Monomerzusammensetzung weitere Monomerverbindungen in einer Menge von bis zu 10 Gew.-% enthält.

6. Köderblock gemäß einem der Ansprüche 1 bis 5, wobei die (Meth)acrylsäureesterkomponente ein C₄-bis C₁₀-Alkylester ist.

7. Köderblock gemäß einem der Ansprüche 1 bis 6, wobei das Futtermittel einen oder mehrere verzehrbare Samen ausgewählt aus Kanariensamen, Mohnsamen, Sonnenblumensamen und Sesamsamen umfasst.

8. Köderblock gemäß einem der Ansprüche 1 bis 7, wobei das Futtermittel ein oder mehrere Getreide ausgewählt aus Weizen, Gerste, Mais, Sorghum, Hafer, Reis, Roggen und Hirse umfasst.

9. Köderblock gemäß einem der Ansprüche 1 bis 8, wobei das Getreide ganze Körner oder Samen, gemahlene Körner oder Samen, geschnittene oder zerkleinerte Körner oder Samen oder ein Gemisch von beliebigen davon ist.

10. Köderblock gemäß einem der Ansprüche 1 bis 9, wobei der Gesamtgehalt an Getreide in dem Köderblock von 50 bis 99 Gew.-% beträgt.

11. Köderblock gemäß einem der Ansprüche 1 bis 10, der eine Vielzahl von Köderpartikeln, die ein Rodentizid enthalten, und eine Vielzahl von Nichtköderpartikeln, die kein Rodentizid enthalten, enthält, wobei die Nichtköderpartikel ein Aroma aufweisen, das von dem Aroma der Köderpartikel verschieden ist, und wobei die Nichtköderpartikel durch wenigstens ein physisches Merkmal ausgewählt aus Größe, Gestalt, Oberflächentextur und innerer Textur von den Köderpartikeln verschieden sind.

12. Köderblock gemäß einem der Ansprüche 1 bis 11, wobei das Rodentizid ausgewählt ist aus Difenacoum, Brodifacoum, Flocoumafen, Bromadiolon, Difethialon, Warfarin, Coumatetrayl, Chlorphacinon, Diphacinon, Coumachlor, Coumafuryl, Pindone, Vitamin D, Ergocalciferol, Cholecalciferol, Alphachloralose und Norbormid.

13. Köderblock gemäß einem der Ansprüche 1 bis 12, erhältlich durch Mischen des Futtermittels, das verzehrbare(s) Samen und/oder Getreide umfasst, mit dem Rodentizid und mit einer wässrigen Dispersion des polymeren Bindemittels, Gießen oder Formen des Gemischs, um einen Block zu bilden, und dann Trocknen des Blocks.

14. Verfahren zur Herstellung des rodentiziden Köderblocks gemäß einem der Ansprüche 1 bis 13, umfassend die Schritte des Mischens des Futtermittels, das verzehrbare(s) Samen und/oder Getreide umfasst, mit dem Rodentizid und mit einer wässrigen Dispersion des polymeren Bindemittels, Gießen oder Formen des Gemischs, um einen Block zu bilden, und dann Trocknen des Blocks.

15. Verfahren zur Bekämpfung von Nagern, umfassend Anordnen eines rodentiziden Köderblocks gemäß einem der Ansprüche 1 bis 13 in der Nähe von Nageraktivität.

## Revendications

1. Bloc d'appât rodenticide comprenant un aliment pour le rongeur comprenant une graine et/ou céréale comestible, au moins un rodenticide et un liant polymère dans lequel le liant polymère comprend un copolymère d'un ester d'acide (méth)acrylique et de styrène, le bloc d'appât ne contenant pas un liant à base de cire.

2. Bloc d'appât selon la revendication 1, dans lequel le liant polymère comprend un copolymère d'un ester alkylique en C₄-C₁₂ d'acide (méth)acrylique et de styrène.

3. Bloc d'appât selon l'une ou l'autre de la revendication 1 ou de la revendication 2, dans lequel le liant polymère est présent en une quantité de 1 à 18 % en poids par rapport au poids total du bloc d'appât.

4. Bloc d'appât selon l'une quelconque des revendications 1 à 3, dans lequel le liant polymère est formé à partir d'une composition de monomères contenant de 25 à 75 % en poids du composant ester d'acide (méth)acrylique et de 20 à 60 % de styrène.

5. Bloc d'appât selon l'une quelconque des revendications 1 à 4, dans lequel le liant polymère contient dans la composition de monomères d'autres composés monomères en une quantité allant jusqu'à 10 %, en poids.

6. Bloc d'appât selon l'une quelconque des revendications 1 à 5, dans lequel le composant ester d'acide (méth)acrylique est un ester alkylique en C₄ à C₁₀.

7. Bloc d'appât selon l'une quelconque des revendications 1 à 6, dans lequel l'aliment comprend une ou plusieurs graines comestibles choisies entre la graine à canaris, la graine de pavot, la graine de tournesol et la graine de sésame.

8. Bloc d'appât selon l'une quelconque des revendications 1 à 7, dans lequel l'aliment comprend une ou plusieurs céréales choisies entre le blé, l'orge, le maïs, le sorgho, l'avoine, le riz, le seigle et le millet.

9. Bloc d'appât selon l'une quelconque des revendications 1 à 8, dans lequel la céréale est des grains ou une graine entiers, des grains ou une graine broyés, des grains ou une graine coupés ou fragmentés ou un mélange de plusieurs quelconques de ceux-ci.

10. Bloc d'appât selon l'une quelconque des revendications 1 à 9, la teneur totale en céréale du bloc d'appât étant de 50 à 99 % en poids.

11. Bloc d'appât selon l'une quelconque des revendications 1 à 10, qui contient une pluralité de particules d'appât contenant un rodenticide et une pluralité de particules qui ne sont pas un appât ne contenant pas un rodenticide, dans lequel les particules qui ne sont pas un appât ont un parfum différent du parfum des particules d'appât et dans lequel les particules qui ne sont pas un appât se distinguent des particules d'appât par au moins une caractéristique physique choisie entre la taille, la forme, la texture de surface et la texture interne.

12. Bloc d'appât selon l'une quelconque des revendications 1 à 11, dans lequel le rodenticide est choisi entre le difénacoum, le brodifacoum, le flocoumafen, la bromadiolone, la diféthialone, la warfarine, le coumatétralyle, la chlorophacinone, la diphacinone, le coumachlore, le coumafuryle, la pindone, la vitamine D, l'ergocalciférol, le cholécalciférol, l'alphachloralose et le norbormide.

13. Bloc d'appât selon l'une quelconque des revendications 1 à 12 pouvant être obtenu par mélange de l'aliment comprenant une graine et/ou céréale comestible avec le rodenticide et avec une dispersion aqueuse du liant polymère, moulage ou façonnage du mélange pour former un bloc et ensuite séchage du bloc.

14. Procédé de fabrication du bloc d'appât rodenticide selon l'une quelconque des revendications 1 à 13, comprenant les étapes consistant à mélanger l'aliment comprenant une graine et/ou céréale comestible avec le rodenticide et avec une dispersion aqueuse du liant polymère, mouler ou façonner le mélange pour former un bloc et ensuite sécher le bloc.

15. Procédé permettant de lutter contre des rongeurs qui comprend la disposition d'un bloc d'appât rodenticide selon l'une quelconque des revendications 1 à 13 au voisinage de l'activité de rongeurs.
